(19) Europäisches Patentamt | European Patent Office | Office européen des brevets

(11) **EP 3 468 753 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **17731065.3**

(22) Anmeldetag: **07.06.2017**

(51) Internationale Patentklassifikation (IPC):
***B25J 9/16*** (2006.01)

(52) Gemeinsame Patentklassifikation (CPC):
**B25J 9/1676;** G05B 2219/39319

(86) Internationale Anmeldenummer:
**PCT/EP2017/000663**

(87) Internationale Veröffentlichungsnummer:
**WO 2017/211455 (14.12.2017 Gazette 2017/50)**

(54) **VERFAHREN ZUM SICHEREN STILLSETZEN EINES MANIPULATORS**

METHOD FOR SAFELY SHUTTING DOWN A MANIPULATOR

PROCÉDÉ POUR ARRÊTER DE MANIÈRE FIABLE UN MANIPULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2016 DE 102016210060**

(43) Veröffentlichungstag der Anmeldung:
**17.04.2019 Patentblatt 2019/16**

(73) Patentinhaber: **KUKA Deutschland GmbH
86165 Augsburg (DE)**

(72) Erfinder: **SCHMIRGEL, Volker
86199 Augsburg (DE)**

(74) Vertreter: **Oelke, Jochen
KUKA Aktiengesellschaft
Zugspitzstraße 140
86165 Augsburg (DE)**

(56) Entgegenhaltungen:
**EP-A2- 2 123 407          EP-A2- 2 839 934
DE-B3-102014 226 933     US-A- 5 994 864**

• **Sami Haddadin: "Towards Safe Robots - Approaching Asimov's 1st Law", , 12. Oktober 2011 (2011-10-12), Seiten 1,42-52, XP055405735, Gefunden im Internet: URL:http://darwin.bth.rwth-aachen.de/opus3 /volltexte/2011/3826/pdf/3826.pdf [gefunden am 2017-09-12]**

EP 3 468 753 B1

## Beschreibung

### Gebiet der Erfindung

Die Erfindung betrifft ein Verfahren und ein System zum Steuern eines Manipulators, und insbesondere zum sicheren Stillsetzen von Achsen eines Manipulators, wobei der Manipulator vorzugsweise ein Industrieroboter ist, und wobei beim Stillsetzen das Einklemmen von Personen und/oder Gegenständen verhindert oder zumindest die entsprechende Klemmkraft reduziert wird.

### Hintergrund der Erfindung

Manipulatoren und insbesondere Industrieroboter werden beispielsweise im industriellen Umfeld bei der Fertigung und Montage eingesetzt. Industrieroboter sind automatisch geführte, mit drei oder mehr frei programmierbaren Achsen ausgerüstete Handhabungsmaschinen, die zur selbsttätigen Handhabung von Objekten mit zweckdienlichen Werkzeugen (Endeffektoren) ausgerüstet sind. Sie können mobil oder ortsfest eingesetzt werden. Dabei sind Manipulatoren typischerweise Teil eines Manipulatorsystems, welches weitere Manipulatoren und zumindest eine Steuereinrichtung umfassen kann. Die Achsen des Manipulators, bzw. des Industrieroboters, werden typischerweise mittels eines oder mehrerer Antriebe angetrieben. Oftmals wird sowohl der Antrieb als auch der Manipulator mittels Sensoren überwacht. Die Überwachung dient der Steuerung und Regelung des Antriebs und/oder des Manipulators.

Neben konventionellen Manipulatorsystemen werden in der industriellen Fertigung für verschiedene Arbeitsprozesse Manipulatoren verwendet, die eine Mensch-Roboter-Kollaboration (MRK) ermöglichen. Hierbei wird ausgenutzt, dass Menschen und Roboter/Manipulatoren eng zusammenarbeiten, um die Produktivität zu erhöhen. Dabei kann sich der Mensch schnell auf unterschiedliche Aufgabenstellungen und vor allem unvorhersehbare Ereignisse einstellen, während die Vorteile des Roboters in der schnellen und präzisen Ausführung von einfachen, sich häufig wiederholenden Tätigkeiten liegen. Durch die MRK werden vorteilhaft beide Stärken kombiniert. Als Beispiele für solche MRK Systeme sind u. a. manuell geführte Manipulatoren und Assistenzroboter zu nennen. Erstere umfassen Manipulatoren, die einen (beispielsweise direkt oder über Telemanipulation) handgesteuerten Manipulatorarm aufweisen, mit dem beispielsweise Lasten versetzt werden können. Assistenzroboter sind Manipulatoren, mit denen ein Bediener ohne trennende Schutzeinrichtung zusammenarbeitet.

Überschneiden sich die Arbeitsräume von Mensch und Manipulator, so müssen besondere Sicherheitsvorkehrungen getroffen werden, um eine Gefährdung des Menschen weitestgehend ausschließen zu können. Beispielsweise, muss die Bewegung des Manipulators zuverlässig und schnell zu stoppen sein, wenn ein Fehler im Ablauf des Manipulators, wie beispielsweise eine Kollision mit dem Manipulator stattgefunden hat, oder droht; d.h. die Achse(n) des Manipulators müssen sicher stillgesetzt werden. Ziel des sicheren Stillsetzens ist es, Gefahr bringende Bewegungen zu verhindern, um Maschinen, Werkstücke und insbesondere Personen nicht zu gefährden.

Die Norm EN 60204-1 unterscheidet dabei drei Stopp-Kategorien des sicheren Stillsetzens von Manipulatoren:

| | |
|---|---|
| Kategorie 0: | Ungesteuertes Stillsetzen der Achse durch sofortige (< 200 ms) Unterbrechung der Energiezufuhr zum Antrieb. |
| Kategorie 1: | Gesteuertes Stillsetzen der Achse durch Unterbrechung der Energiezufuhr zum Antrieb, nach Erreichen des Stillstandes der Achse (= zeitverzögerte Abschaltung der Energiezufuhr, z.B. nach 1,5 s). |
| Kategorie 2: | Gesteuertes Stillsetzen der Achse ohne Unterbrechung der Energiezufuhr zum Antrieb. Diese Stopp-Kategorie erlaubt ein bahntreues Stillsetzen des Manipulators. |

Insbesondere bei den Stopps der Kategorie 0 und 1 fallen typischerweise nach der Unterbrechung der Energiezufuhr zum Antrieb zusätzlich an den Achsen des Manipulators angebrachte Bremsen ein, um ein möglichst sofortiges Stillsetzen zu erreichen und/oder ein schwerkraftbedingtes Zusammensacken des Manipulators zu verhindern. Das gesteuerte Stillseizen erfolgt typischerweise mittels der Antriebe der Achsen, wobei die Antriebe typischerweise positionsgeregelt sind.

Die drei Stopp-Kategorien haben gemein, dass der Manipulator nach dem Kommandieren des Stopps sich trägheitsbedingt ein Stück weiter in die Kollisionsrichtung bewegt und nach vollständigem Abbremsen in der erreichten Position verbleibt. Insbesondere beim positionsgeregelten Stillsetzen, "schiebt" der Manipulator auf grund der positionsgeregelten Bremsrampe auch während des Stillsetzens noch aktiv in die Fehlerrichtung (Kollisionsrichtung) nach, bis der Stillstand erreicht ist. Dies ist insbesondere der Fall, wenn die Ist-Geschwindigkeit aufgrund der von außen auf den Manipulator einwirkenden Kräfte kleiner ist als die Soll-Geschwindigkeit. Anschließend verbleibt der Manipulator in der zuletzt erreichten Position. Folglich kann es durch den Fehler/die Kollision und insbesondere durch das Verbleiben in der stillgesetzten Position zu einem andauernden Einklemmen einer Person und/oder eines Gegenstandes durch den Manipulator kommen. Insbesondere, da der Manipulator stillgesetzt wird, sobald die Geschwindigkeit des Manipulators null ist, wird die Klemmung aufrechterhalten, wodurch eine Gefährdung entsteht. Die Klemmung kann Verletzungen einer Person hervorrufen, oder das Bergen einer eingeklemmten Person erschweren oder sogar verhindern. Auch kann der Manipulator selbst oder ein geklemmter Gegenstand durch die andauernde Klemmung beschädigt werden.

Die EP 2 839 934 A2 offenbart ein Verfahren zur Ausführung einer Fehlerreaktion auf Basis der Überwachung der Funktionsfähigkeit und/oder einer Antriebsgröße eines Robotermotors. Die DE 10 2014 226 933 B3 offenbart ein Verfahren zur Touch-Up Programmierung eines Roboters im Nachgiebigkeilsmodus.

Die Aufgabe der vorliegenden Erfindung ist es daher ein Verfahren zum Stillsetzen eines Manipulators breitzustellen, welches die genannten Nachteile zumindest teilweise überwindet.

### Ausführliche Beschreibung der Erfindung

Die Aufgabe wird durch ein Verfahren zum Stillsetzen zumindest einer Achse eines Manipulators nach Anspruch 1, durch ein computerlesbares Medium nach Anspruch 15 sowie durch eine Steuereinrichtung nach Anspruch 16 gelöst.

Insbesondere wird die Aufgabe durch ein Verfahren zum Stillsetzen zumindest einer Achse eines Manipulators gelöst, wobei jeder Achse ein Antrieb zugeordnet ist, und wobei dem Manipulator zumindest eine Steuereinrichtung zugeordnet ist, welche dazu eingerichtet ist, den Manipulator gemäß dem Verfahren zu steuern, wobei das Verfahren zumindest die folgenden Verfahrensschritte umfasst:

- Erkennen eines Fehlers der Steuerung des Manipulators und Ausgeben eines Signals zum Stillsetzen zumindest einer Achse des Manipulators;
- Erfassen einer Ist-Position der zumindest einen Achse zum oder unmittelbar nach dem Zeitpunkt des Erkennens des Fehlers;
- Setzen der Soll-Position der zumindest einen Achse auf die erfasste Ist-Position oder auf eine Position der Achse in der kein Fehler vorliegt;
- Abbremsen der zumindest einen Achse, bis die Ist-Geschwindigkeit der zumindest einen Achse gleich null ist;
- Rückfahren und Stillsetzen der zumindest einen Achse in die gesetzte Soll- Position in einer Nachgiebigkeitsregelung, wobei in der Nachgiebigkeitsregelung der zumindest einen Achse ein Federkonstanten-Wert zugeordnet ist, und wobei ein Antrieb, welcher der zumindest einen Achse zugeordnet ist, eine Kraft und/oder ein Moment zum Rückfahren der zumindest einen Achse erzeugt, welche/welches von der Abweichung der aktuellen Ist-Position der Achse zur gesetzten Soll-Position der Achse und dem Federkonstanten-Wert abhängt.

Der Manipulator kann beispielsweise ein Industrieroboter und insbesondere ein sogenannter Leichtbauroboter (LBR) sein, der insbesondere für Montagetätigkeiten und leichtere Bearbeitungsvorgänge geeignet ist. Vorzugsweise ermöglichen interne Kraftsensoren im Leichtbauroboter durch die Überwachung der auftretenden Kräfte eine sichere Mensch-Roboter-Kollaboration (MRK).

Insbesondere kann die Steuerungseinrichtung des Manipulators den Manipulator in der Nachgiebigkeitsregelung steuern, wobei es dem Manipulator erlaubt ist, eine Ist-Position einzunehmen, die sich von der Soll-Position unterscheiden kann. Dabei verhält sich der Manipulator nach außen als enthalte er eine Feder, die den Manipulator von der Ist-Position $x_{ist}$ zur

Soll-Position $x_{soll}$ mit der Kraft F hinzieht. Die Kraft F berechnet sich nach dem Federgesetz, wobei c dem Federkonstanten-Wert entspricht:

$$F = c \cdot (x_{soll} - x_{ist}) = c \cdot \Delta x$$

Entsprechend dem obigen Verfahren und gemäß diesem Beispiel wird der Manipulator mit der Kraft F in die zuvor gesetzte Soll-Position rückgefahren und stillgesetzt, wenn die Ist-Position der Soll-Position entspricht. Analog zu dem genannten Beispiel kann der Federkonstanten-Wert auch bezüglich eines Drehwinkels $\varphi$ der zumindest einen Achse und eines Drehmoments M angegeben werden, sodass das entsprechende Federgesetzt wie folgt definiert ist:

$$M = c \cdot (\varphi_{soll} - \varphi_{ist}) = c \cdot \Delta\varphi$$

In der Nachgiebigkeitsregelung kann der Federkonstanten-Wert c darüber hinaus durch die Steuerungseinrichtung einstellbar und insbesondere regelbar sein. So ist der Manipulator in der Lage in der Nachgiebigkeitsregelung definierte Kontakt- oder Klemmkräfte F einzuhalten.

Das Abbremsen kann in der Nachgiebigkeitsregelung oder konventionell erfolgen. Im Falle eines nachgiebig geregelten Abbremsens, wird der Manipulator umso stärker gebremst, je weiter er sich von der Soll-Position entfernt. Durch geeignetes einstellen bzw. nachregeln des Federkonstanten-Wertes c, kann eine maximale Bremsverzögerung erreicht werden. Die Regelung des Federkonstanten-Wertes c ermöglicht zudem eine positionsunabhängige, maximale Bremsverzögerung. Alternativ kann das Abbremsen auch mittels herkömmlicher Bremsverfahren, insbesondere durch die Nutzung des der Achse zugeordneten Antriebs erfolgen. Insbesondere kann beim Abbremsen zugelassen werden, dass von einer vorherbestimmten Bewegungsbahn des Manipulators abgewichen wird. Somit kann ein schnelles Abbremsen ermöglicht werden, wodurch die Gefährdung für Personen verringert werden kann.

Nach dem Abbremsen ist die Ist-Geschwindigkeit des Manipulators gleich null. Jedoch wird der Manipulator/die Achse in dieser Position noch nicht stillgesetzt, sondern vielmehr rückgefahren und erst anschließend stillgesetzt, um eine Klemmung von Personen und/oder Gegenständen zu vermindern oder vollständig aufzuheben.

Das Rückfahren und Stillsetzen erfolgt vorzugsweise vollständig in der Nachgiebigkeitsregelung. Somit kann der Manipulator von der Position, in welcher vollständig abgebremst wurde (d.h. $\dot{x}, \dot{\varphi} = 0$) in Abhängigkeit des eingestellten Federkonstanten-Wertes c maximal in Richtung der Soll-Position beschleunigt werden, um die Klemmung möglichst schnell zumindest teilweise aufzulösen. Ferner kann der schließlich stillgesetzte Manipulator durch die Nachgiebigkeitsregelung manuell aus der gesetzten Soll-Position bewegt werden, um einen eingeklemmten Gegenstand und/oder eine eingeklemmte Person aus der Klemmung zu befreien.

Insbesondere kann der Manipulator Rotationsachsen und/oder Linearachsen umfassen, wobei das Verfahren auf zumindest eine der Achsen angewendet wird. Dadurch kann eine hohe Sicherheit für die MRK erzielt werden, und das vorteilhafte Verfahren zum Stillsetzen zumindest einer Achse eines Manipulators auf eine Vielzahl unterschiedlicher Manipulatoren angewendet werden.

Weiterhin ist die Position der Achse in der kein Fehler vorliegt eine Position auf einer Bewegungsbahn des Manipulators, welche Bewegungsbahn vor dem Erkennen des Fehlers durchfahren wurde. Insbesondere wird ein Fehler erkannt, wenn eine Kollision zumindest einer Achse des Manipulators vorliegt. Ist die Position der Achse in der kein Fehler vorliegt eine Position auf einer Bewegungsbahn des Manipulators, welche Bewegungsbahn vor dem Erkennen des Fehlers durchfahren wurde, wird der Manipulator über die erkannte Fehlerposition hinaus zurückgefahren, wodurch eine nach dem Stillsetzen verbleibende Klemmung weiter minimiert werden kann. Das Setzen der Soll-Position auf eine Position auf einer Bewegungsbahn des Manipulators in der kein-Fehler (insbesondere keine Kollision) vorliegt, vereinfacht den Wiederanlauf des Manipulators, nachdem ein Fehler der zum Ausgeben des Signals zum Stillsetzen geführt hat und/oder das Kollisionshindernis, beseitigt ist. Insbesondere kann ein Manipulator-Programm, welches die Bewegungsbahn des Manipulators vorgibt, von der erreichten Soll-Position aus fortgesetzt werden.

Ein Fehler kann beispielsweise erkannt werden, wenn ein Taster, wie etwa ein Notaus-Taster betätigt wird. Ebenso kann ein Fehler mittels anderer Sensoren, wie Kraft-, Moment-, Näherungssensoren und/oder dergleichen erfasst werden.

Weiterhin kann die Steuereinrichtung mehrere Regelungsmodi zur Steuerung des Manipulators umfassen, wobei das Verfahren weiterhin ein Umschalten eines Regelungsmodus zur Steuerung des Manipulators in die Nachgiebigkeitsregelung umfasst, wobei der Zeitpunkt des Umschaltens zeitlich so gewählt ist, dass zumindest das Rückfahren und Stillsetzen der zumindest einen Achse in die gesetzte Soll-Position in der Nachgiebigkeitsregelung erfolgt, und bevorzugt das Abbremsen der zumindest einen Achse zumindest teilweise in der Nachgiebigkeitsregelung erfolgt.

Die Regelungsmodi können beispielsweise eine Positionsregelung, eine Kraftregelung, eine Geschwindigkeitsregelung und dergleichen umfassen.

Die Nachgiebigkeitsregelung regelt die Nachgiebigkeit des Manipulators, also die Verknüpfung (Federkonstanten-Wert c) zwischen Kraft/Moment (F, M) und Position ($\Delta x, \Delta \varphi$), wenn eine Achse des Manipulators und/oder ein Endeffektor des Manipulators ein Objekt berührt. Die Nachgiebigkeit ist dabei als das "Maß der Roboterfähigkeit, den Kontaktkräften entgegenzuwirken" definiert.

Kraftregelung bezeichnet die Regelung der Kraft, mit welcher ein Manipulator auf ein Objekt einwirkt. Durch Regelung der Kontaktkraft können Beschädigungen des Manipulators sowie der zu bearbeitenden Objekte und Verletzungen beim Umgang mit Menschen verhindert werden. Die Kraftregelung nutzt die gewünschte Kraft als Sollwert innerhalb eines geschlossenen Regelkreises. Sie wird typischerweise als parallele Kraft-/Positionsregelung in Form einer Kaskadenregelung ausgeführt oder als hybride Kraft-/Positionsregelung, bei der zwischen Positions- und Kraftregelung umgeschaltet wird.

Positionsregelung bezeichnet die Regelung einer Position, die der Manipulator bzw. ein Endeffektor des Manipulators einnehmen soll. Insbesondere wird eine zeitliche Abfolge von Positionen, d.h. eine Manipulatorbahn, geregelt.

Geschwindigkeitsregelung bezeichnet die Regelung einer Geschwindigkeit, mit der der Manipulator bzw. ein Endeffektor des Manipulators verfahren werden soll.

Das Umschalten ermöglicht die Anwendung des zuvor beschriebenen Verfahrens, insbesondere des Rückfahrens und des Stillsetzens in der Nachgiebigkeitsregelung, auch wenn zuvor ein anderer Regelungsmodus aktiv war. Wird auch das Abbremsen in der Nachgiebigkeitsregelung ausgeführt, so ist ein besonders sanftes Abbremsen möglich. Dies schont den Manipulator. Insbesondere ist das Abbremsen in der Nachgiebigkeitsregelung vorteilhaft, wenn im Fehlerfall eine sogenannte freie Kollision vorliegt. Freie Kollisionen liegen vor, wenn nach der Kollision keine Klemmung auftritt, da der Kollisionsgegenstand beweglich gelagert ist. Im Falle der Kollision schiebt der Manipulator den Kollisionsgegenstand aus der Bahn und wird anschließend sanft abgebremst. Eine schnelle Bremsung ist dann nicht mehr erforderlich. Weiterhin ermöglicht das Abbremsen in der Nachgiebigkeitsregelung die von außen auf den Manipulator wirkenden Kräfte, verglichen mit z.B. einer positionsgeregelten Bremsung, besser zu nutzen. Wird beispielsweise positionsgeregelt gebremst, so fährt der Manipulator eine vordefinierte Bremsbahn ab. Sind die von außen auf den Manipulator wirkenden Kräfte größer als die benötigte Bremskraft zum Erreichen der vordefinierten Bremsbahn, so "schiebt" der Manipulator aktiv in die Fehler- bzw. Kollisionsrichtung nach. Wird hingegen in der Nachgiebigkeitsregelung abgebremst, so kommt es nicht zu dem vorhergehend beschrieben "Nachschieben", wodurch die Klemmung von vornhinein verringert werden kann.

Insbesondere ist der Federkonstanten-Wert der zumindest einen Achse beim Rückfahren und Stillsetzen derart vorgegeben, dass die zumindest eine Achse nicht überschwingt. Dies wird erreicht, indem der Federkonstanten-Wert in Abhängigkeit der Dämpfung der Achse gewählt wird, wobei zumindest der aperiodische Grenzfall beim Rückfahren erzielt wird. Tritt kein Überschwingen auf, sind die Bewegungen des Manipulators minimal, sodass die Gefahr weiterer Fehler und/oder Kollisionen reduziert werden kann.

Zudem kann das Abbremsen der zumindest einen Achse mittels des Antriebs der Achse erfolgen, und in einem weiteren Verfahrensschritt kann der Federkonstanten-Wert der zumindest einen Achse verändert werden, wobei der Federkonstanten-Wert vorzugsweise erhöht wird, um eine höhere Bremsverzögerung mittels des Antriebs zu erzielen. Ein Abbremsen mittels des Antriebs ermöglicht ein bahntreues Bremsen, d.h. der Manipulator weicht beim Abbremsen nicht von der vordefinierten Bewegungsbahn ab. Durch die Veränderung bzw. Nachregelung des Federkonstanten-Werts kann eine maximale Bremsverzögerung erzielt werden. Vorzugsweise wird der Federkonstanten-Wert derart nachgeregelt, dass eine positionsunabhängige maximale Bremsverzögerung erzielt wird, um den Manipulator schnell abbremsen zu können.

Insbesondere kann der Federkonstanten-Wert der zumindest einen Achse so verändert werden, dass eine maximale Klemmkraft bei einem Fehler und/oder einer Kollision nicht überschritten wird. Hierdurch kann eine Gefährdung für Personen und Gegenstände weiter reduziert werden. Die maximal zulässige Klemmkraft ist kann vorzugsweise anwendungsspezifisch definiert werden. Die maximal zulässige Klemmkraft kann in einem Bereich von 20 N bis 250 N, bevorzugt ein einem Bereich von 50 N bis 220 N und am bevorzugtesten in einem Bereich von 90 N bis 190 N liegen.

Als Fehler wird erfindungsgemäß eine Kollision des Manipulators angesehen, welcher bei einer Kollision zumindest einer Achse des Manipulators erkannt wird. Der **Endeffektor** ist dabei das letzte Element der kinematischen Kette des Manipulators, insbesondere ein vom Manipulator geführtes Werkzeug, Objekt oder Werkstück.

Weiterhin kann in einem weiteren Verfahrensschritt der Federkonstanten-Wert der zumindest einen Achse beim oder nach dem Rückfahren und Stillsetzen reduziert werden, vorzugsweise dann, wenn die aktuelle Ist-Geschwindigkeit eine vorherbestimmte Grenzgeschwindigkeit unterschritten hat. Je kleiner der Federkonstanten-Wert der zumindest einen Achse eingestellt ist, desto einfacher kann der Manipulator aus der erreichten Soll-Position bewegt werden, um einen eingeklemmten Gegenstand und/oder eine eingeklemmte Person zu befreien. Je größer der Federkonstanten-Wert der zumindest einen Achse eingestellt ist, desto schneller kann der Manipulator in die Soll-Position bewegt werden. Vorzugsweise wird daher der Federkonstanten-Wert zu Beginn des Rückfahrens groß, bevorzugt maximal, gewählt und anschließend reduziert, wenn die aktuelle Ist-Geschwindigkeit eine vorherbestimmte Grenzgeschwindigkeit unterschritten hat, insbesondere wenn sich der Manipulator in der Nähe der Soll-Position befindet, oder diese erreicht hat. Soll die Reduzierung des Federkonstanten-Werts erst nach dem Stillsetzen erfolgen, so ist die Grenzgeschwindigkeit gleich null zu wählen.

Weiterhin kann dem Manipulator zumindest ein Sensor zugeordnet sein, wobei das Erkennen eines Fehlers, insbesondere einer Kollision des Manipulators und/oder einer drohenden Kollision des Manipulators, mittels des Sensors erfolgt. Geeignete Sensoren können optische Sensoren, wie Kameras, kapazitive Sensoren, wie Näherungssensoren, resistive Sensoren, oder andere geeignete Sensoren, wie Radar-basierte Sensoren sein. Insbesondere kann durch das rechtzeitige Erkennen eines Fehlers, wie beispielsweise einer drohenden Kollision, die Kollision selbst vermieden werden. Das Erkennen einer Kollision kann beispielsweise durch eine maximal zulässige Kontaktkraft des Manipulators bestimmt werden. Wird die Kontaktkraft überschritten, so liegt eine Kollision vor. Ebenso kann durch das rechtzeitige Erkennen eines drohenden Fehlers, der Fehler selbst vermieden werden. Soll beispielsweise eine maximale Geschwindigkeit nicht überschritten werden, und wird eine drohenden Überschreitung der Geschwindigkeit rechtzeitig erkannt, so kann ein Abbremsen das Auftreten eines Fehlers verhindern.

Insbesondere kann zumindest einer Achse des Manipulators ein Sensor zugeordnet sein, der dazu eingerichtet ist ein auf die Achse wirkendes Drehmoment und/oder eine auf die Achse wirkende Kraft zu überwachen, wobei das Erkennen eines Fehlers, insbesondere einer Kollision des Manipulators, mittels des Sensors erkannt wird. Derartige Sensoren sind insbesondere interne Sensoren, wie sie beispielsweise in Leichtbaurobotern (LBR) vorgesehen sind. Das Erkennen eines Fehlers, insbesondere einer Kollision, kann dann beispielsweise durch eine maximal zulässige Kontaktkraft des Manipulators bestimmt werden. Wird die Kontaktkraft überschritten, so liegt ein Fehler, bzw. eine Kollision, vor.

Weiterhin kann das Verfahren die folgenden Verfahrensschritte umfassen:

- Kontinuierliches Erfassen einer Ist-Geschwindigkeit zumindest einer Achse des Manipulators;
- Bestimmen eines zulässigen Maximal-Geschwindigkeitsbetrags für zumindest eine Achse des Manipulators, wobei der Maximal-Geschwindigkeitsbetrag vorzugsweise zeitabhängig ist und mit zunehmender Zeit abnimmt, und

- Auslösen eines Stopps, der von dem Abbremsen der zumindest einen Achse verschieden ist, insbesondere eines Stopps der Kategorie 0, der Kategorie 1 und/oder der Kategorie 2, wenn die erfasste Ist-Geschwindigkeit den zulässigen Maximal-Geschwindigkeitsbetrag überschreitet.

Durch die kontinuierliche Erfassung der Ist-Geschwindigkeit kann eine Gefährdung einer Person und/oder eines Gegenstandes durch den Manipulator weiter reduziert werden, da sichergestellt ist, dass eine Gefährdung durch zu hohe Geschwindigkeiten ausgeschlossen ist. Insbesondere kann das Abbremsen und das Rückfahren und Stillsetzen durch diese Verfahrensschritte überwacht werden. Ein Maximal-Geschwindigkeitsbetrag der zeitabhängig ist und mit zunehmender Zeit abnimmt, stellt sicher, dass der Manipulator in einer vorherbestimmten Zeit vollständig abgebremst und/oder stillgesetzt ist. Ist das Abbremsen und/oder Stillsetzen nicht allein durch den Antrieb der zumindest einen Achse zu erreichen, kann ein Stopp der Kategorie 0, 1 und/oder 2 ausgelöst werden, der ein (maximal) schnelles Abbremsen und/oder Stillsetzen ermöglicht. Führt dieser Stopp zu einem unerwünschten Einklemmen, so können die Antriebe nach erfolgreichem Abbremsen und/oder Stillsetzen des Manipulators erneut mit Energie versorgt werden. Anschließend kann das Verfahren, insbesondere mit dem Rückfahren und Stillsetzen der zumindest einen Achse in die gesetzte Soll- Position in einer Nachgiebigkeitsregelung, fortgesetzt werden.

Weiterhin kann das Verfahren den folgenden Verfahrensschritt umfassen:

- Ausgeben eines Signals zum sofortigen Bremsen der zumindest einen Achse an eine mechanische Bremse, welche der zumindest einen Achse zugeordnet ist, wenn die überwachte Ist-Geschwindigkeit den zulässigen Maximal-Geschwindigkeitsbetrag überschreitet.

Durch die mechanische Bremse kann ein sehr schnelles Abbremsen und/oder Stillsetzen erreicht werden. Zudem wird, wenn ein Stopp, wie beispielsweise ein Stopp der Kategorie oausgelöst wird und die Antriebe beispielsweise stromlos geschaltet werden, ein gravitationsbedingtes Zusammensacken des Manipulators vermieden. Analog zu dem oben beschriebenen Abbremsen und/oder Stillsetzen des Manipulators mittels eines Stopps, der von dem Abbremsen der zumindest einen Achse verschieden ist, kann das Verfahren, insbesondere mit dem Rückfahren und Stillsetzen der zumindest einen Achse in die gesetzte Soll- Position in einer Nachgiebigkeitsregelung, nach dem Abbremsen und/oder Stillsetzen des Manipulators mittels einer mechanischen Bremse, fortgesetzt werden.

Insbesondere kann das Verfahren auf die Achsen des Manipulators angewendet werden, die zum Zeitpunkt der Ausgabe des Signals zum Stillsetzen eine Bewegungsrichtungskomponente in Richtung des Kollisionspunktes aufweisen. In diesem Fall können Achsen, die eine Bewegung, die entgegen der Richtung des Kollisionspunktes gerichtet ist, nicht gebremst werden, um eine Kollision zu verhindern und/oder abzumildern. Achsen die sich hingegen mit einer Bewegungsrichtungskomponente in Richtung des Kollisionspunktes bewegen, werden gebremst um eine Kollision zu verhindern und/oder abzumildern.

Insbesondere kann das Verfahren auf alle Achsen des Manipulators angewendet werden. Somit wird sichergestellt, dass der Manipulator nach dem Stillsetzen vollständig stillgesetzt ist; d.h. keine der Achsen bewegt sich nach dem Stillsetzen selbstständig weiter. Aufgrund der Nachgiebigkeitsregelung kann jedoch ein gravitationsbedingtes Zusammensacken des Manipulators vermieden werden. Weiterhin ermöglicht die Nachgiebigkeitsregelung das manuelle Bewegen des Manipulators, um einen eingeklemmten Gegenstand und/oder eine eingeklemmte Person aus der Klemmung zu befreien.

Vorzugsweise umfasst der Antrieb einen Elektromotor. Elektromotor-basierte Antriebe sind besonders für das vorangehend beschriebene Verfahren geeignet, da deren Drehmoment und/oder Drehzahl sehr schnell geregelt werden kann.

Die Aufgabe wird weiterhin durch ein computerlesbares Medium gelöst, welches Programmbefehle umfasst, die dazu geeignet sind eine Steuereinrichtung eines Manipulatorsystems dazu zu veranlassen das vorangehend beschriebene Verfahren auszuführen.

Ebenso wir die Aufgabe durch Manipulatorsystem gelöst, umfassend einen Manipulator und eines Steuereinrichtung, welche dazu eingerichtet ist, den Manipulator zu steuern, welcher zumindest eine Achse umfasst, wobei jeder Achse ein Antrieb zugeordnet ist, wobei die Steuereinrichtung dazu eingerichtet ist, den Manipulator gemäß dem oben beschriebenen Verfahren zu steuern.

## Ausführliche Beschreibung der Figuren

Im Folgenden wird die Erfindung unter Bezugnahme auf die beigefügten Figuren im Detail erläutert. Dabei zeigt

Fig. 1A    eine schematische Darstellung eines Manipulatorsystems 1 in einer freien Kollision;

Fig. 1B    eine schematische Darstellung eines Manipulatorsystems 1 in einer klemmenden Kollision;

Fig. 2      ein schematisches Ablaufdiagramm eines Verfahrens;

Fig. 3      ein schematisches Ablaufdiagramm eines erweiterten Verfahrens;

Fig. 4      ein schematisches Position-Zeit-Diagramm des Verfahrens;

Fig. 5A    ein schematisches Geschwindigkeit-Zeit-Diagramm des Verfahrens, und

Fig. 5B    ein weiteres schematisches Geschwindigkeit-Zeit-Diagramm des Verfahrens.

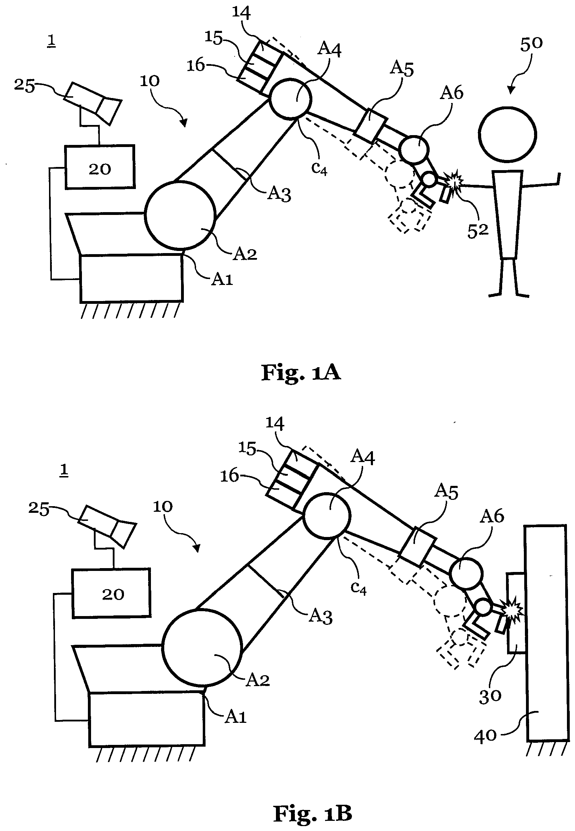

Insbesondere zeigen die Fig. 1A und 1B ein Manipulatorsystem 1, in unterschiedlichen Fehlerfällen, wobei das Manipulatorsystem 1 in Fig. 1A in einer freien Kollision und in Fig. 1B in einer klemmenden Kollision dargestellt ist. Das Manipulatorsystem 1 umfasst zumindest einen Manipulator 10, welcher die Achsen A1 bis A6 umfasst. In der Nachgiebigkeitsregelung kann jeder der Achsen A1 bis A6 ein eigenständiger Federkonstanten-Wert $c_1$ bis $c_6$ zugeordnet werden.

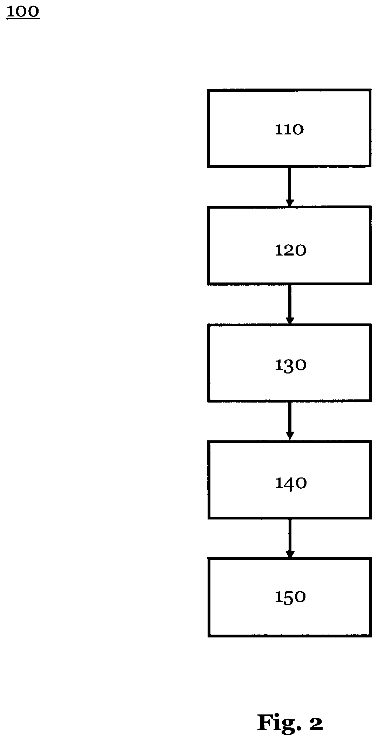

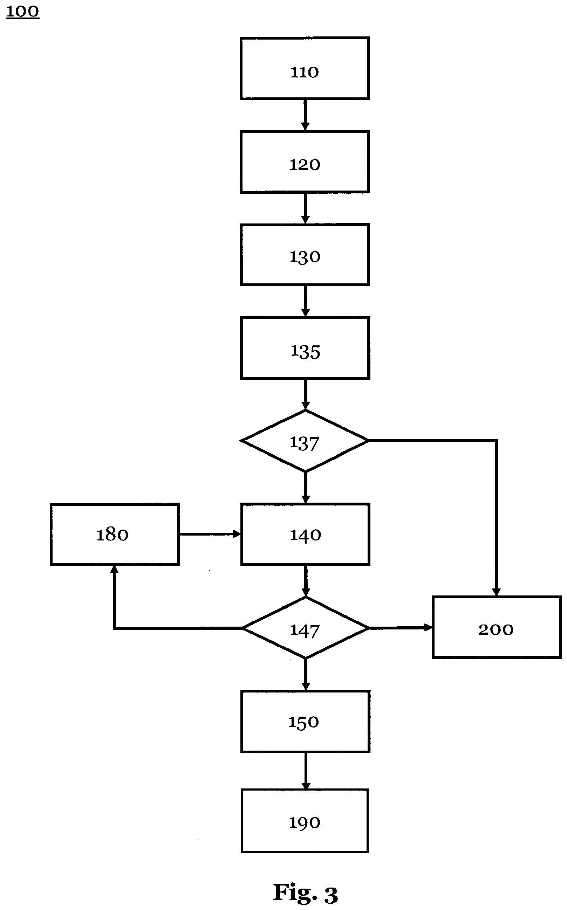

Dem Manipulator 10 ist eine Steuereinrichtung 20 zugeordnet, welche dazu eingerichtet ist den Manipulator 10 gemäß dem vorangehend beschriebenen Verfahren zu steuern. Ein beispielhaftes Verfahren 100 wird unter Bezugnahme auf die Figuren 2 und 3 näher erläutert.

Der Steuereinrichtung 20 sind weiterhin Sensoren 25 zugeordnet, welche dazu eingerichtet sind einen Fehler, insbesondere eine Kollision und/oder eine drohende Kollision, zu erkennen. Der Sensor/die Sensoren 25 können beispielsweise optische Sensoren, kapazitive Sensoren, rezessive Sensoren oder anderweitige Sensoren sein. Die Sensoren können am Manipulator 10 selbst oder in der Umgebung des Manipulators 10 angebracht sein.

Insbesondere kann der Manipulator 10 auch interne Sensoren umfassen, die eine Kraft und/oder ein Moment, welches auf die Achsen A1 bis A6 wirkt, erfassen kann. Die Achsen des Manipulators A1 bis A6 sind durch Antriebe 14, 15, 16 angetrieben. Gezeigt sind in den Fig. 1A und 1B die Antriebe 14, 15 und 16, welche den Achsen A4, A5, A6 zugeordnet sind. In Fig. 1A kollidiert der Manipulator 10 mit einer Person 50, und genauer mit einem Arm 52 der Person. Hier handelt sich um eine freie Kollision, da die Person 50 den Arm 52 aus der Kollision hinausbewegen kann, bzw. der Manipulator den Arm 52 bei der Kollision verschieben kann, ohne diesen einzuklemmen. Fig. 1B zeigt hingegen eine klemmende Kollision eines Gegenstands 30, der durch die Kollision gegen einen ortsfesten Gegenstand 40, wie etwa eine Wand gedrückt und somit geklemmt wird. Eine Kollision zwischen Manipulator und einer Person/einem Objekt kann mittels einer oder mehrerer Achsen des Manipulators und/oder mittels des Endeffektors des Manipulators erfolgen bzw. drohen.

In Fig. 2 ist ein schematisches Ablaufdiagramm des Verfahrens 100 dargestellt. Entsprechend des Verfahrens 100 wird in einem ersten Verfahrensschritt 110 ein Fehler, insbesondere eine Kollision des Manipulators 10 und/oder eine drohenden Kollision des Manipulators 10, erkannt und ein Signal ausgegeben, welches zum Stillsetzen zumindest einer Achse A1 bis A6 des Manipulators führt. Der Fehler, wie etwa eine Kollision und/oder die drohende Kollision, kann beispielsweise durch die Sensoren 25 oder interne Sensoren des Manipulators 10 erkannt werden. Das Signal zum Stillsetzen der zumindest einen Achse A1 bis A6 wird typischerweise von der Steuereinrichtung 20 an die Antriebe 14, 15, 16 des Manipulators 10 bzw. den Antrieb der zumindest einen Achse ausgegeben.

In einem weiteren Verfahrensschritt 120 wird eine Ist-Position der zumindest einen Achse zum oder unmittelbar nach dem Zeitpunkt des Erkennens einer Kollision des Manipulators 10 und/oder einer drohenden Kollision des Manipulators 10 (d.h. nach dem Zeitpunkt des Erkennens des Fehler) erfasst.

Diese Ist-Position wird in einem Verfahrensschritt 130 als neue Soll-Position der zumindest einen Achse des Manipulators gesetzt. Alternativ kann als Soll-Position eine beliebige Position der Achse gewählt werden in der sicher kein Fehler (bzw. keine Kollision) vorliegt. Insbesondere wird als eine Position in der kein Fehler vorliegt eine Position auf einer Bewegungsbahn des Manipulators vorgegeben, welche Bewegungsbahn vor dem Erkennen des Fehlers (bzw. vor dem Erkennen einer Kollision und/oder einer drohenden Kollision des Manipulators) durchfahren wurde. Somit kann der Manipulator auf der Bewegungsbahn zurückbewegt werden und dort stillgesetzt werden, so dass ein einfaches Wiederanfahren des Manipulators möglich ist.

In Verfahrensschritt 140 wird die zumindest eine Achse des Manipulators 10 oder der gesamte Manipulator 10 abgebremst, bis die Ist-Geschwindigkeit der zumindest einen Achse gleich null ist, d. h. bis der Manipulator steht ($\dot{x}, \dot{\varphi} = 0$). In diesem Schritt endet das Verfahren zum Stillsetzen im Gegensatz zu herkömmlichen Bremsverfahren jedoch nicht, sondern es schließt sich Verfahrensschritt 150 an, in welchem der Manipulator zurückgefahren und schließlich stillgesetzt wird.

Das Rückfahren 150 erfolgt in die zuvor gesetzte Soll-Position, wobei das Rückfahren selbst in einer Nachgiebigkeitsregelung erfolgt. In der Nachgiebigkeitsregelung ist es dem Manipulator 10 erlaubt eine Ist-Position einzunehmen, die sich von der Soll-Position unterscheiden kann. Dabei verhält sich der Manipulator 10 nach außen als enthalte er eine Feder, die den Manipulator von der Ist-Position zur Soll-Position mit einer Kraft F, bzw. einem Moment M, hinzieht. In den Fig. 1A und 1B ist die Soll-Position als gestrichelte Kontur des Manipulators 10 dargestellt. Die Ist-Position ist als durchgezogene Darstellung des Manipulators 10 dargestellt. Die Kraft F bzw. das entsprechend Moment M bestimmt sich nach dem Federgesetz, wie vorangehend beschrieben. Wird die Soll-Position erreicht, wird der Manipulator in dieser Position stillgesetzt, d.h. die Geschwindigkeit des Manipulators, bzw. der entsprechenden Achse ist erneut gleich null (d.h. $\dot{x}, \dot{\varphi} = 0$).

Insbesondere ist nach dem Verfahrensschritt 150 die Nachgiebigkeitsregelung weiterhin aktiv, so dass der Manipulator manuell bewegt werden kann und eine eingeklemmte Person/oder ein eingeklemmter Gegenstand aus der Klemmung befreit werden kann.

Fig. 3 zeigt ein erweitertes Verfahren 100, wobei nach dem Setzen der Soll-Position 130 erst in Nachgiebigkeitsregelungsmodus umgeschalten wird (Schritt 135). Somit kann der Manipulator vorangehend in einem anderen Regelungsmodus wie beispielsweise einer Positionsregelung und/oder einer Kraftregelung betrieben werden.

In Schritt 137 wird die aktuelle Ist-Geschwindigkeit des Manipulators 10 erfasst und überwacht. Ist die Ist-Geschwindigkeit über einem vorherbestimmten maximalen Geschwindigkeitsbetrag, der vorzugsweise mit zunehmender Zeit t nach dem Ausgeben des Signals zum Stillsetzen 110 der zumindest einen Achse abnimmt, so wird beispielsweise ein Stopp der Kategorie 0 kommandiert und/oder zusätzliche mechanische Bremsen aktiviert, um ein maximal schnelles Abbremsen und/oder Stillsetzen zu erreichen (Schritt 200).

Liegt die Ist-Geschwindigkeit $\dot{x}_{ist}, \dot{\varphi}_{ist}$ unter dem Maximal-Geschwindigkeitsbetrag $\dot{x}_{max}, \dot{\varphi}_{max}$ so wird mit Verfahrensschritt 140 fortgefahren, in welchem der Manipulator bzw. die zumindest eine Achse in der Nachgiebigkeitsregelung abgebremst wird.

In Verfahrensschritt 147 wird erneut die Ist-Geschwindigkeit $\dot{x}_{ist}, \dot{\varphi}_{ist}$ überprüft. Überschreitet die Ist-Geschwindigkeit $\dot{x}_{ist}, \dot{\varphi}_{ist}$ den zulässigen Maximal-Geschwindigkeitsbetrag $\dot{x}_{max}, \dot{\varphi}_{max}$, so wird mit dem vorangehend beschriebenen Verfahrensschritt 200 fortgefahren.

Ist die Ist-Geschwindigkeit gleich null, so kann mit dem Rückfahren und Stillsetzen 150 der zumindest einen Achse bzw. des Manipulators fortgefahren werden. Ist die Geschwindigkeit größer null, so kann in Schritt 180 der Federkonstanten-Wert c angepasst werden um eine maximale Abbremsung der zumindest einen Achse bzw. des Manipulators zu erzielen. Beim und/oder nach dem Rückfahren und Stillsetzen 150 der zumindest einen Achse bzw. des Manipulators kann in Verfahrensschritt 190 der Federkonstanten-Wert c reduziert werden. Dies vereinfacht das manuelle Bewegen des Manipulators 10, so dass eine eingeklemmte Person 50 und/oder ein eingeklemmter Gegenstand 30 leicht befreit werden können.

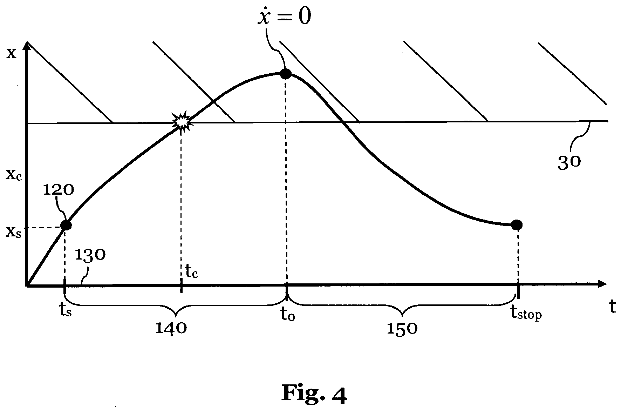

Fig. 4 zeigt ein schematisches Position-Zeit-Diagramm des Verfahrens 100. Die Position ist als eindimensionale Ortsposition x dargestellt. Ebenso könnte ein Drehwinkel φ der entsprechenden Achse dargestellt sein. In das Diagramm ist mit dünnen Linien der Gegenstand 30 eingezeichnet, welcher, wie in Fig. 1B dargestellt, durch einen Manipulator 10 geklemmt ist. Die dargestellte Position-Zeit-Kurve entspricht der eindimensionalen Bewegung des Manipulators 10 in x-Richtung. In einem ersten Zeitabschnitt bis zum Zeitpunkt $t_s$ verfährt der Manipulator 10 mit einer konstanten Geschwindigkeit in Richtung des Gegenstands 30. Zum Zeitpunkt $t_s$ wird ein Fehler, wie beispielsweise eine drohende Kollision, erkannt und ein Signal zum Abbremsen (Schritt 110) der zumindest einen Achse des Manipulators gesendet. Entsprechend wird eine Ist-Position $x_s$ erfasst (Schritt 120) und die Soll-Position (Schritt 130) auf die entsprechende Ist-Position $x_s$ gesetzt. Nachdem Ausgeben des Signals zum Stillsetzen wird das Abbremsen (Schritt 140) eingeleitet. Im gezeigten Beispiel kommt es trotz des Abbremsens zum Zeitpunkt $t_c$ zu einem Fehler, d.h. einer Kollision des Manipulators mit dem Gegenstand 30 in der Position $x_c$. In Folge der Kollision wird der Manipulator stärker abgebremst bis zu dem Zeitpunkt $t_0$ die Ist-Geschwindigkeit gleich null ist (d.h. $\dot{x}, \dot{\varphi} = 0$). Nun wird mit dem Rückfahren und Stillsetzen 150 begonnen. Dies erfolgt in Nachgiebigkeitsregelung, so dass von dem Zeitpunkt $t_0$ die Beschleunigung in Richtung der gesetzten Soll-Position maximal ist. Wird schließlich die Soll-Position zum Zeitpunkt $t_{stop}$ erreicht, wird der Manipulator in der Soll-Position $x_{soll} = x_s$ stillgesetzt. Wie zu sehen ist, ist der Federkonstanten-Wert c des Manipulators/der Achse derart geregelt, dass kein Überschwingen während des Rückfahrens 150 auftritt.

Alternativ zu der vorangehend beschriebenen Verfahrensabfolge, kann auch erst zum Zeitpunkt $t_c$ der tatsächliche Fehler, d.h. die Kollision erkannt werden und ein Signal zum Stillsetzen der zumindest einen Achse ausgegeben werden.

In diesem Fall würde die Soll-Position einer Position gleichgesetzt, in der kein Fehler (keine Kollision) vorliegt, d.h. bspw. wieder die Position $x_s$. Die Position $x_s$ entspricht einer Position, die der Manipulator 10 vor dem Fehler (der Kollision) durchlaufen hat. Folglich kann der Manipulator nach dem Stillsetzen von dieser Position einfach erneut gestartet werden.

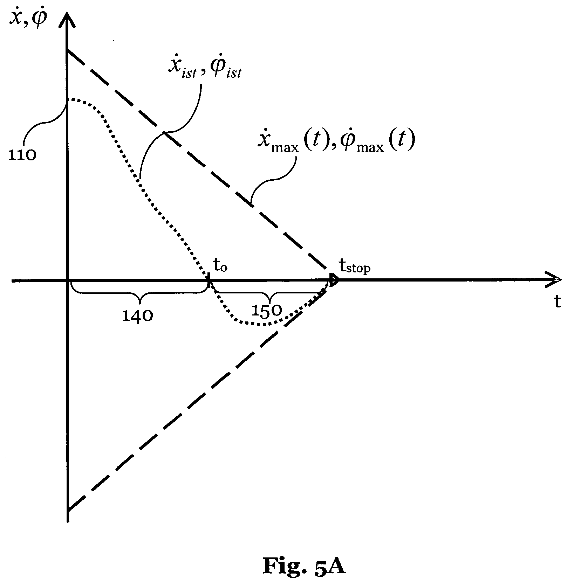

Fig. 5A zeigt ein schematisches Diagramm eines Geschwindigkeit-ZeitVerhaltens für das Stillsetzen zumindest einer Achse in einer nachgiebigen Regelung. Die gestrichelten Linien, die linear zum Zeitpunkt $t_{stop}$ verlaufen entsprechen dem zeitabhängigen Maximal-Geschwindigkeitsbetrag $\dot{x}_{max}, \dot{\varphi}_{max}$. Die gepunktete Linie entspricht der Ist-Geschwindigkeit $\dot{x}_{ist}, \dot{\varphi}_{ist}$ der Achse. Zum Zeitpunkt 110 wird ein Fehler (eine drohende Kollision) erfasst und ein Signal zum Stillsetzen der zumindest einen Achse ausgegeben. Anschließend wird der Manipulator/die Achse bis zum Zeitpunkt $t_0$ abgebremst. Ab dem Zeitpunkt $t_0$ wird mit dem Rückziehen und Stillsetzen 150 begonnen, bis im Zeitpunkt $t_{stop}$ der Manipulator in der Soll-Position stillgesetzt ist.

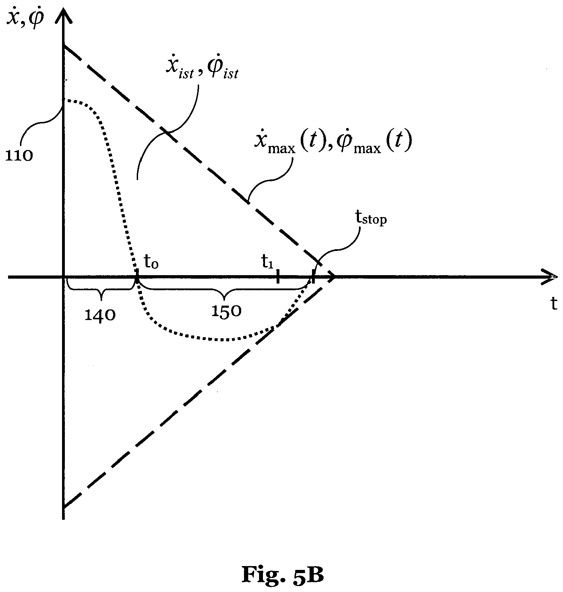

Fig. 5B zeigt ein weiteres Geschwindigkeit-Zeit-Diagramm des Verfahrens. Entsprechend entspricht die gestrichelte Linie einem Maximal-Geschwindigkeitsbetrag $\dot{x}_{max}, \dot{\varphi}_{max}$ der zeitabhängig ist. Die gepunktete Linie entspricht der Ist-Geschwindigkeit $\dot{x}_{ist}, \dot{\varphi}_{ist}$ der Achse. Zum Zeitpunkt 110 wird das Stillsetzen der Achse kommandiert, worauf der Manipulator/die Achse abgebremst wird (Schritt 140). Das Abbremsen ist zum Zeitpunkt $t_0$ abgeschlossen, d.h. $\dot{x}, \dot{\varphi} = 0$. Anschließend folgt das Rückziehen des Manipulators (Schritt 150). Beim Rückziehen des Manipulators wird zum Zeitpunkt $t_1$ der zulässige Maximal-Geschwindigkeitsbetrag $\dot{x}_{max}, \dot{\varphi}_{max}$ überschritten, wodurch ein Stopp (z.B. der Kategorie 0) ausgelöst wird. Zum Zeitpunkt $t_{stop}$ ist die Achse des Manipulators bzw. der Manipulator stillgesetzt.

**Bezugszeichenliste**

| | |
|---|---|
| 1 | Manipulatorsystem |
| 10 | Manipulator |
| 14, 15, 16 | Antriebe |
| 20 | Steuereinrichtung |
| 25 | Sensor |
| 30 | Gegenstand |
| 40 | ortsfester Gegenstand |
| 50 | Person |
| 52 | Arm der Person |
| A1 bis A6 | Achsen |
| c4 | Federkonstanten-Wert |
| 100 | Verfahren |
| 110 | Erkennen eines Fehlers und Ausgeben eines Signals zum Stillsetzen |
| 120 | Erfassen einer Ist-Position |
| 130 | Setzen der Soll-Position |
| 140 | Abbremsen |
| 150 | Rückfahren und Stillsetzen |
| 137, 147 | Geschwindigkeitsüberwachung |
| 180 | Anpassen des Federkonstanten-Werts |
| 190 | Reduzieren des Federkonstanten-Werts |
| 200 | Auslösen Stopp (z.B. der Kategorie 0) |
| $x_c$ | Kollisionspunkt, Fehlerpunkt |
| $x_s$ | Ist-Position |
| $t_s$ | Zeitpunkt des Erkennens eines Fehlers (einer Kollision) |
| $t_c$ | Zeitpunkt des Fehlers (der Kollision) |
| $t_o$ | Zeitpunkt mit Geschwindigkeit gleich o |
| $t_{stop.}$ | Zeitpunkt des Stillsetzens |
| $\dot{x}_{ist}, \dot{\varphi}_{ist}$ | Ist-Geschwindigkeit |
| $\dot{x}_{max}, \dot{\varphi}_{max}$ | Maximal-Geschwindigkeitsbetrag |

**Patentansprüche**

1. Verfahren (100) zum Stillsetzen zumindest einer Achse (A1 - A6) eines Manipulators (10), wobei jeder Achse (A1 - A6) ein Antrieb (14, 15, 16) zugeordnet ist, und wobei dem Manipulator (10) zumindest eine Steuereinrichtung (20) zugeordnet ist, welche dazu eingerichtet ist, den Manipulator (10) gemäß dem Verfahren (100) zu steuern, wobei das Verfahren (100) zumindest die folgenden Verfahrensschritte umfasst:

   Erkennen (110) einer Kollision der zumindest einen Achse (A1 - A6) des Manipulators (10) und Ausgeben eines Signals zum Stillsetzen zumindest einer Achse (A1 - A6) des Manipulators (10),
   wobei der zumindest einen Achse (A1-A6) des Manipulators (10) ein Sensor zugeordnet ist, der dazu eingerichtet ist, ein auf die Achse (A1-A6) wirkendes Drehmoment und/oder eine auf die Achse (A1-A6) wirkende Kraft zu überwachen, und

   wobei das Erkennen (110) einer Kollision der zumindest einen Achse (A1- A6) des Manipulators (10) mittels des Sensors erkannt wird;
   Erfassen (120) einer Ist-Position der zumindest einen Achse (A1 - A6) zum Zeitpunkt des Erkennens der Kollision;
   Setzen (130) der Soll-Position der zumindest einen Achse (A4) auf eine Position der Achse (A4) in der keine Kollision vorliegt, wobei die Position der Achse (A4) in der keine Kollision vorliegt eine Position auf einer Bewegungsbahn des Manipulators (10) ist, welche Bewegungsbahn vor dem Erkennen (110) der Kollision des Manipulators (10) durchfahren wurde;
   Abbremsen (140) der zumindest einen Achse (A4), bis die Ist-Geschwindigkeit der zumindest einen Achse (A4) gleich null ist, **dadurch gekennzeichnet, dass** das Verfahren (100) weiterhin die folgenden Verfahrensschritte umfasst:
   Rückfahren und Stillsetzen (150) der zumindest einen Achse (A4) in die gesetzte Soll- Position in einer Nachgiebigkeitsregelung, wobei in der Nachgiebigkeitsregelung der zumindest einen Achse (A4) ein Federkonstanten-Wert ($c_4$) zugeordnet ist, und wobei ein Antrieb (14), welcher der zumindest einen Achse (A4) zugeordnet ist, eine Kraft und/oder ein Moment zum Rückfahren der zumindest einen Achse (A4) erzeugt, welche/welches von der Abweichung der aktuellen Ist-Position der Achse (A4) zur gesetzten Soll-Position der Achse (A4) und dem Federkonstanten-Wert ($c_4$) abhängt, wobei der Federkonstanten-Wert ($c_4$) der zumindest einen Achse (A4) beim Rückfahren und Stillsetzen (150) derart vorgegeben ist, dass die zumindest eine Achse (A4) nicht überschwingt.

2. Verfahren (100) nach einem der vorhergehenden Ansprüche, wobei die Steuereinrichtung (20) mehrere Regelungsmodi zur Steuerung des Manipulators (10) umfasst, und wobei das Verfahren weiterhin ein Umschalten (135) eines Regelungsmodus zur Steuerung des Manipulators (1) in die Nachgiebigkeitsregelung umfasst, wobei der Zeitpunkt des Umschaltens (135) zeitlich so gewählt ist, dass zumindest das Rückfahren und Stillsetzen (160) der zumindest einen Achse (A4) in die gesetzte Soll-Position in der Nachgiebigkeitsregelung erfolgt, und bevorzugt das Abbremsen (140) der zumindest einen Achse (A4) zumindest teilweise in der Nachgiebigkeitsregelung erfolgt.

3. Verfahren (100) nach Anspruch 2, wobei das Abbremsen (140) der zumindest einen Achse (A4) mittels des Antriebs (14) der Achse (A4) erfolgt, und in einem weiteren Verfahrensschritt (180) der Federkonstanten-Wert ($c_4$) der zumindest einen Achse (A4) verändert wird, wobei der Federkonstanten-Wert ($c_4$) vorzugsweise erhöht wird, um eine höhere Bremsverzögerung mittels des Antriebs (14) zu erzielen.

4. Verfahren (100) nach einem der Ansprüche 2 und 3, wobei der Federkonstanten-Wert ($c_4$) der zumindest einen Achse (A4) so verändert wird, dass eine maximale Klemmkraft bei einer Kollision nicht überschritten wird.

5. Verfahren (100) nach einem der vorhergehenden Ansprüche, wobei das Verfahren auf die Achsen (A1 - A6) des Manipulators (10) angewendet wird, die zum Zeitpunkt der Ausgabe des Signals zum Stillsetzen eine Bewegungsrichtungskomponente in Richtung des Kollisionspunktes ($x_c$) aufweisen.

6. Verfahren (100) nach einem der vorhergehenden Ansprüche 1 - 4, wobei das Verfahren auf alle Achsen (A1 - A6) des Manipulators (10) angewendet wird.

7. Computerlesbares Medium, welches Programmbefehle umfasst, die dazu geeignet sind eine Steuereinrichtung (20) eines Manipulatorsystems (1) dazu zu veranlassen ein Verfahren (100) gemäß der Ansprüche 1 bis 6 auszuführen.

8. Manipulatorsystem (1), umfassend einen Manipulator (10) und eine Steuereinrichtung (20), welche dazu eingerichtet ist, den Manipulator (10) zu steuern, welcher zumindest eine Achse (A1 - A6) umfasst, wobei jeder Achse (A1 - A6) ein Antrieb (14, 15, 16) zugeordnet ist, wobei die Steuereinrichtung (20) dazu eingerichtet ist, den Manipulator (10) gemäß einem Verfahren (100) der Ansprüche 1 bis 6 zu steuern.

**Claims**

1. Method (100) for shutting down at least one axis (A1 - A6) of a manipulator (10), wherein each axis (A1 - A6) is assigned a drive (14, 15, 16), and wherein at least one control device (20) which is set up to control the manipulator (10) according to the method (100) is assigned to the manipulator (10), wherein the method (100) comprises at least the following method steps:

   recognizing (110) a collision of the at least one axis (A1 - A6) of the manipulator (10) and outputting a signal to shut down at least one axis (A1 - A6) of the manipulator (10), wherein the at least one axis (A1 - A6) of the manipulator (10) is assigned a sensor, which is set up to monitor a torque acting on the axis (A1 - A6) and/or a force acting on the axis (A1 - A6), and

wherein a collision of the at least one axis (A1 - A6) of the manipulator (10) is recognized (110) by means of the sensor;
detecting (120) a current position of the at least one axis (A1 - A6) at the time that the collision is recognized;
setting (130) the target position of the at least one axis (A4) to a position of the axis (A4) in which there is no collision, wherein the position of the axis (A4) in which there is no collision is a position on a movement path of the manipulator (10) through which movement path the manipulator (10) would travel before the recognition (110) of the collision of the manipulator (10) ;
braking (140) the at least one axis (A4) until the current speed of the at least one axis (A4) is equal to zero, **characterized in that** the method (100) also comprises the following method steps:
reversing and shutting down (150) the at least one axis (A4) into the set target position in a compliance control, wherein a spring constant value ($c_4$) is assigned to the at least one axis (A4) in the compliance control, and wherein a drive (14) which is assigned to the at least one axis (A4) generates a force and/or a torque for reversing the at least one axis (A4) which depends on the deviation of the current position of the axis (A4) from the set target position of the axis (A4) and the spring constant value ($c_4$), wherein the spring constant value ($c_4$) of the at least one axis (A4) when reversing and shutting down (150) is defined in such a way that the at least one axis (A4) does not overshoot.

2. Method (100) according to one of the preceding claims, wherein the control device (20) comprises a plurality of control modes for controlling the manipulator (10), and wherein the method also comprises switching (135) a control mode for controlling the manipulator (1) to the compliance control, wherein the time of the switching (135) is chosen such that at least the reversing and shutting down (160) of the at least one axis (A4) into the set target position is carried out in the compliance control, and preferably the braking (140) of the at least one axis (A4) is carried out at least partly in the compliance control.

3. Method (100) according to Claim 2, wherein the at least one axis (A4) is braked (140) by means of the drive (14) of the axis (A4) and, in a further method step (180), the spring constant value ($c_4$) of the at least one axis (A4) is changed, the spring constant value ($c_4$) preferably being increased in order to achieve higher braking deceleration by means of the drive (14).

4. Method (100) according to either of Claims 2 and 3, wherein the spring constant value ($c_4$) of the at least one axis (A4) is changed such that a maximum clamping force is not exceeded in the event of a collision.

5. Method (100) according to one of the preceding claims, wherein the method is applied to the axes (A1 - A6) of the manipulator (10) which, at the time that the signal to shut down is output, have a motion direction component in the direction of the collision point ($x_c$).

6. Method (100) according to one of the preceding Claims 1 - 4, wherein the method is applied to all the axes (A1 - A6) of the manipulator (10).

7. Computer-readable medium which comprises program instructions which are suitable to cause a control device (20) of a manipulator system (1) to carry out a method (100) according to Claims 1 to 6.

8. Manipulator system (1), comprising a manipulator (10) and a control device (20) which is set up to control the manipulator (10), which system comprises at least one axis (A1 - A6), wherein each axis (A1 - A6) is assigned a drive (14, 15, 16), wherein the control device (20) is set up to control the manipulator (10) according to a method (100) of Claims 1 to 6.

**Revendications**

1. Procédé (100) pour arrêter au moins un axe (A1 - A6) d'un manipulateur (10), un entraînement (14, 15, 16) étant associé à chaque axe (A1 - A6), et au moins un dispositif de commande (20) étant associé au manipulateur (10), lequel dispositif de commande est configuré pour commander le manipulateur (10) selon le procédé (100), le procédé (100) comprenant au moins les étapes de procédé suivantes :

   reconnaissance (110) d'une collision de l'au moins un axe (A1 - A6) du manipulateur (10) et délivrance d'un signal d'arrêt d'au moins un axe (A1 - A6) du manipulateur (10), un capteur étant associé à l'au moins un axe (A1 - A6) du manipulateur (10), lequel capteur est configuré pour surveiller un couple agissant sur l'axe (A1 - A6) et/ou une force agissant sur l'axe (A1 - A6), et la reconnaissance (110) d'une collision de l'au moins un axe (A1 - A6) du manipulateur (10) étant reconnue au moyen du capteur ;
   détection (120) d'une position réelle de l'au moins un axe (A1 - A6) à l'instant de la reconnaissance de la collision ;
   réglage (130) de la position de consigne de l'au moins un axe ($A_4$) à une position de l'axe ($A_4$) dans laquelle aucune collision n'a lieu, la position de l'axe ($A_4$) dans laquelle aucune collision n'a lieu étant une position sur une trajectoire du manipulateur (10), laquelle trajectoire a été parcourue avant la reconnaissance (110) de la collision du manipulateur (10) ;
   freinage (140) de l'au moins un axe ($A_4$) jusqu'à ce que la vitesse réelle de l'au moins un axe ($A_4$) soit égale à zéro, **caractérisé en ce que** le procédé (100) comprend en outre les étapes de procédé suivantes :
   recul et arrêt (150) de l'au moins un axe ($A_4$) dans la position de consigne réglée dans une régulation de flexibilité, une valeur de constante de ressort ($c_4$) étant associée à l'au moins un axe ($A_4$) dans la régulation de flexibilité, et un entraînement (14), lequel est associé à l'au moins un axe ($A_4$), produisant une force et/ou un couple pour le recul de l'au moins un axe ($A_4$), laquelle force/lequel couple dépend de l'écart de la position réelle actuelle de l'axe ($A_4$) par rapport à la position de consigne réglée de l'axe ($A_4$) et de la valeur de constante de ressort ($c_4$), la valeur de constante ressort ($c_4$) de l'au moins un axe ($A_4$) lors du recul et de l'arrêt (150) étant prédéfinie de telle sorte que l'au moins un axe ($A_4$) ne suroscille pas.

2. Procédé (100) selon l'une des revendications précédentes, le dispositif de commande (20) comprenant plusieurs modes de régulation pour la commande du manipulateur (10), et le procédé comprenant en outre une commutation (135) d'un mode de régulation pour la commande du manipulateur (1) dans la régulation de flexibilité, l'instant de la commutation (135) étant sélectionné dans le temps de telle sorte qu'au moins le recul et l'arrêt (160) de l'au moins un axe ($A_4$) dans la position de consigne réglée s'effectue dans la régulation de flexibilité, et de préférence le freinage (140) de l'au moins un axe ($A_4$) s'effectue au moins partiellement dans la régulation de flexibilité.

3. Procédé (100) selon la revendication 2, le freinage (140) de l'au moins un axe ($A_4$) s'effectuant au moyen de l'entraînement (14) de l'axe ($A_4$), et dans une autre étape de procédé (180) la valeur de constante de ressort ($c_4$) de l'au moins un axe ($A_4$) étant modifiée, la valeur de constante de ressort ($c_4$) étant de préférence accrue, afin d'obtenir une décélération de freinage plus élevée au moyen de l'entraînement (14).

4. Procédé (100) selon l'une des revendications 2 et 3, la valeur de constante de ressort ($c_4$) de l'au moins

un axe ($A_4$) étant modifiée de telle sorte qu'une force de serrage maximale ne soit pas dépassée lors d'une collision.

5. Procédé (100) selon l'une des revendications précédentes, le procédé étant utilisé sur les axes (A1 - A6) du manipulateur (10) qui présentent, à l'instant de la délivrance du signal d'arrêt, une composante directionnelle de déplacement en direction du point de collision ($x_c$).

6. Procédé (100) selon l'une des revendications précédentes 1 à 4, le procédé étant utilisé sur tous les axes (A1 - A6) du manipulateur (10).

7. Support lisible par ordinateur, lequel comprend des instructions de programmes qui sont appropriées à amener un dispositif de commande (20) d'un système de manipulateur (1) à mettre en œuvre un procédé (100) selon les revendications 1 à 6.

8. Système de manipulateur (1), comprenant un manipulateur (10) et un dispositif de commande (20), lequel est configuré pour commander le manipulateur (10), lequel comprend au moins un axe (A1 - A6), un entraînement (14, 15, 16) étant associé à chaque axe (A1 - A6), le dispositif de commande (20) étant configuré pour commander le manipulateur (10) selon un procédé (100) des revendications 1 à 6.

**Fig. 1A**

**Fig. 1B**

<u>100</u>

**Fig. 2**

100

Fig. 3

**Fig. 4**

**Fig. 5A**

**Fig. 5B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2839934 A2

- DE 102014226933 B3